Europäisches Patentamt

(19) European Patent Office                    (11) Publication number:          0 178 689

Office européen des brevets                                                A2

## (12) EUROPEAN PATENT APPLICATION

(21) Application number: **85115873.3**

(22) Date of filing: **17.10.84**

(51) Int. Cl.⁴: **F 24 D 1/00**
**B 05 B 7/06, F 23 M 5/00**
**C 04 B 28/34**
**//(C04B28/34, 14:10, 14:30, 14:38)**

(30) Priority: **17.10.83 US 542272**
**12.10.84 US 660190**
**12.10.84 US 660206**
**12.10.84 US 660207**

(43) Date of publication of application:
**23.04.86 Bulletin 86/17**

(84) Designated Contracting States:
**AT BE CH DE FR GB IT LI LU NL SE**

(60) Publication number of the earlier application
in accordance with Art. 76 EPC: **0 142 715**

(71) Applicant: **MANVILLE SERVICE CORPORATION**
**Ken-Caryl Ranch**
**Denver Colorado 80217(US)**

(72) Inventor: **Smith, William Hahn**
**163 Orchard Drive**
**McMurray Pennsylvania 15317(US)**

(74) Representative: **Grättinger, Günter**
**Wittelsbacherstrasse 5 Postfach 16 49**
**D-8130 Starnberg(DE)**

(54) **Refractory binder and method for making it.**

㊼ A refractory binder comprises a phosphate matrix and a tackifying agent in intimate admixture with said phosphate matrix. A method for making said binder comprises the steps of stirring a phosphate-tackifying agent mixture, heating said mixture to at least approximately 37.78°C (100°F), adding hydrated alumina to said mixture, and heating said hydrated alumina-phosphate-tackifying agent to at least approximately 82.2°C. This binder may be applied for a refractory material comprising a plurality of refractory fibers and a phosphate-tackifying agent mixture.

EP 0 178 689 A2

Croydon Printing Company Ltd

Divisional Application "A"
of EP 84 112 530.5

Refractory binder and method for making it

The invention relates to a refractory binder and
a method for making it.

In the past, high temperature resistant fibrous material has been applied to heated surfaces, such
as heat treating furnaces and kilns, by attaching
batts or strips containing such fibers to the  heated
surface. This method requires mechanical anchoring
or fastening means to attach the strips to the heated
surface. Such mechanical attachment is expensive
in that it requires large amounts of labor and fastening materials to attach the strips. In addition,
because this method is time consuming, it requires
the furnace or kiln to be out of service for extended
periods of time. Finally, gaps between adjoining
strips may occur either during the attachment process
or later due to thermal shrinkage which allows heat
leakage between the layers of fiber.

Improvements to this method of attaching refractory
fiber linings to the wall of kilns and furnaces have
been made such as is described in U.S. Patent No.
4,381,634. This method involving the mechanical attachment of modules, overcomes many of the problems
associated with layered linings especially the opening of gaps between the edges of layers due to heat
shrinkage at elevated temperatures. However, like
the above method, the use of modules requires mechani-
cal attachment to öthe metal shells of furnace which
again require considerable cost in labor. The use
of modules has also been found to be of value in
relining old dense refractory linings such as refractory brick. In this case the folded or pleated modules are glued to the old monolithic or brick lining
by use of a refractory mortar or glue which is generally of the hydraulic setting nature. This method
of relining of kilns is labor intensive requiring
the application of mortar to the brick work and then
quickly applying the folded modules thereon. This
method requires that time be given for the setting
of the hydraulik mortar before the newly lined kiln
can be fired.

All the above methods have one feature in common which is that they present an unbonded refractory fiber lining to the interior of the kiln. As time goes by these fibers devitrify (crystallize) and in so doing lose some of their mechanical strength making them more susceptible to mechanical abrasion and destruction due to high velocity gases from the heating mechanismus of the kilns. High temperature resistant binder powders have been mixed with water and sprayed with refractory fibers. Such methods typically employ calcium alumina cements which are very alkaline and will settle when in suspension. It is also difficult to achieve homogenous mixing of fiber and binder with such a system. A hydraulic bond must be achieved prior to drying of the cement otherwise bonding of the fibers will not occur. In addition, careful drying of the sprayed mixture must be undertaken in order to prevent violent spalling.

Other methods for spraying insulation have been employed in the past utilizing organic binders. For example, U.S. patent 2,929,436 discloses a method and apparatus for spraying a mixture of fibers and resin material. As indicative of prior methods of application, this publication discloses mixing fiber and resin in a nozzle and spraying the mixture onto
a surface. However, while suited for its intended
purpose, such method and apparatus, if used in the
spraying of refractory fiber with a tacky inorganic
binder, would cause clogging of the nozzle. In addition, incomplete coating of the refractory fibers
could cause a weakened layer of fibers which in turn
could cause failure of the insulating layer at high
temperatures. Because of the temperatures to which
refractory fibers are subjected, often 1093.3°C
(2,000°F) or more, such failures could be dangerous
to workers in such industries as the steel industry
and could cause extensive damage to furnaces and
kilns. Thus, the intimate admixture of refractory
fiber and the tacky inorganic binder to form a monolithic layer is important to the safe and efficient
operation of such furnaces and kilns. Prior art binders for bonding refractoy fibers have included a
variety of compounds including colloidal silica and
phosphoric acid (actually $P_2O_5$ which may be derived
from $H_3PO_4$ under appropriate temperature conditions).
While these binder systems are useful in certain
applications, they are not without relative disadvantages. For example, prior art phosphoric acid binders
do not adhere well to refractory fibers. Binders
including colloidal silica are subject to irreversible
precipitation of the silica if the

- 5 -

binder has been subjected to freezing temperatures.

A very serious disadvantage with prior art binder systems is binder migration. That is, as the binders are cured, the binder migrates to the surface of the material producing a material with a very soft interior. This causes serious integrity problems with the resulting material. The material is thus not suitable for use in applications requiring a monolithic structure. In addition, prior binder systems employing colloidal suspensions such as colloidal silica or alumina must be cured very carefully. That is, because of binder migration, the colloidal sol must be allowed to gel prior to curing. Failure to do so results in migration of the binder particles from the interior to the surface of the insulation layer. In addition, prior art binders must be sprayed onto a cool surface thus necessitating relatively long cooling periods before a furnace can be insulatated.

Another disadvantage of prior art binders has been
that they are not nearly as temperature resistant
as the refractory fibers themselves. Thus, high temperature applications of the fiber-binder mix are
limited by the properties of the binder rather than
the fiber. For example, an insulation poduct made
from refractory fibers which are themselves temperature resistant up to 1426.67°C (2600°F) may only
be applied in temperature environments up to 1093.3°C
(2000°F) if the binder used in that product is only
effective up to 1093.3°C (2000°F). Any reaction of
the binder and fiber which tends to flux the fiber
composition causes increased fiber shrinkage. Thus,
the use temperature of the fiber-binder system is
limited to a temperature less than the use temperature
of the fibers alone.

Other practical problems encountered with the use
of prior binder systems is that they are expensive,
there may be safety and environmental problems in
their applications, they may lack good suspension
properties, and finally, as with prior phosporic
acid binders, the binders do not possess the tackiness
or adhesiveness properties which are desirable in
many applications. In applications where it is desirable to spray the refractory fiber onto a surface
such as a furnace wall, it is essential that the
binder be sufficiently tacky to cause the fibers to adhere to one another and to the surface.

The present invention combines an inorganic binder matrix with temperature resistant clays. The tacky nature of the binder renders it suitable for a wide variety of applications. The resulting binder of the present invention is temperature resistant to at least 1648.89°C (3000°F) which allows its use with high temperature refractory fibers. As used herein, refractory fibers are defined as inorganic amorphous or crystalline fibers which are not adversely affected by temperatures in excess of 815.5°C (1500°F). An example of such fibers is alumina-silica fibers. However, as is known in the art, fibers including zirconia, chromium, calcium, magnesium and the like may be utilized. The binder disclosed herein could also be employed with metal oxides to provide an insulating layer of such material. In addition, the binder system of the present invention greatly reduce or eliminates binder migration which occurs in prior art binders.

The binder includes a tackifying agent in combination with a phosphate binder matrix such as aluminum phosphate. The preferred tackifying agents are temperature resistant clays such as montmorillonite clays. The most preferred clay is western bentonite clay. A fluxing agent may also be added to the binder in small quantities to increase the strength of the binder to fiber bonds at elevated temperatures. Chromium oxide may also be added to the binder to improve the stability of the binder to fiber bonds at elevated tempertures. In addition, chromium oxide adds color to the binder which may be advantageous in the coating process.

In addition to phosphate compounds, colloidal suspensions such as colloidal silica, colloidal alumina, and colloidal zirconia may be combined with the tackifying agents disclosed herein to produce a suitable binder. When the disclosed tackifying agents are combined with these colloidal suspensions the severe binder migration problems associated with colloidal binders such as colloidal silica are overcome. The addition of the tackifying agent imparts good suspension characteristics to the binder.

Additionallly, the preferred binder of the present invention may be sprayed directly onto hot surfaces thus eliminating long delays in insulatating furnaces requiring complete cool down. Finally, the novel binder claimed herein reduces shrinkage of the coated fibers thus improving their refractory characteristics. Because shrinkage is minimized, failure of the insulation layer due to cracks in the layer is reduced. Prior art binders, especially colloidal silica binders without the tackifying agent disclosed herein required gelling of the colloidal silica. Otherwise, serious binder migration to the surface of the insulation layer would occur.

In accordance with the present invention, an excellent binder system has been discovered which preferably comprises chromium aluminum phosphate and as suitable tackifying agent. The chromium aluminum phosphate compound preferred in the present invention may be characterized by the following generallized formula: $Al_2O_3.3P_2O_5.xCr_2O_3$ wherein x ranges from about 0.1 to 10.

The term "tackifying agent", as used with respect
to the present invention, is meant to define those
substances which impart tackiness or adhesive properties to the binder system of the present invention.
Generally, such tackifying agents will be inorganic
in nature. High temperature resistant clays, especially montmorillonite clays (preferably the western
bentonite variety) have been found to be useful in
the present invention. Sodium and calcium based clays
such as southern bentonite may also be used as a
tackifying agent. Whatever tackifying agent is used
should, of course, be compatible with the overall
binder system and its intended use with regard to
both chemical and physical properties. It is especially important that the tackifier, in the quantity
used, not produce fluxing of the binder- fiber system
at elevated temperatures.

While the inventive binder system may be made according to any suitable method known to those skilled
in the art, the superior binder system of the present
invention is preferably made according to the generallized process described herein below.

A mixture of phosphoric acid solution, an appropriate fluxing agent such as boric acid, and bentonite clay are stirred together and then heated to a temperature (typically 37.78°C (100°F)) sufficient for the ingredients to react with one another. Although varying concentrations of phosphoric acid may be used, in the present invention a 75% or higher phosphoric acid solution is preferred. As used herein, the term appropriate fluxing agent is meant to include those substances which will impart added strength to the inventive binder system by improving glassy bonding at elevated temperatures. While boric acid is a preferred fluxing agent, other inorganic metal salts such as sodium carbonate, magnesium chloride, magnesium nitrate, calcium carbonate, cobalt oxide, and others may be employed.

After heating to approximately 37.78°C (100°F) the above reation mixture is combined with a hydrated alumina. The preferred alumina is a hydrated alumina such as that currently marketed by ALCOA under the trademark C-31. The mixture is then heated to a temperature of approximately 82.2°C (180°F) at which time chromic oxide ($Cr_2O_3$) is added. The preferred chromic oxide has a specific gravity of 5.1 and is added in a percent, by weight, of 1.26% of the total mixture weight. At this point reaction becomes exothermic, the temperature rises to approximately 114.4°C (238°F), the volume of the mixture approximately doubles, and the reation is complete. The solution is allowed to cool and an inert carrier such as water is added to adjust the specific gravity of the binder to 1.70 at room temperature.

- 12 -

The above ingredients are used in the present invention at the following general, preferred, and most
preferred weight percentage levels based upon the
total weight of the binder.

TABLE

| Ingredient | General | Preferred | Most Preferred |
|---|---|---|---|
| Phosphoric Acid Solution | 50-90 | 75-85 | 78.8 |
| Fluxing Agent | 1-5 | 2-4 | 2.87 |
| Tackifying Agent | 1-3 | 1-5 | 2.87 |
| Hydrated Alumina | 5-30 | 10-20 | 14.2 |
| Chromium Compund | 0.5-5 | 1-2 | 1.26 |

While chromic oxide $Cr_2O_3$ has been disclosed, other suitable chromium compounds include solutions of chromic acid ($H_2CrO_4$), and chromium salt solutions such as magnesium chromate, which can be converted under appropriate temperature conditions to chromia ($Cr_2O_3$), may be added.

Similarly, while alumina has been disclosed as the preferred metal oxide to be reacted with the phosphoric acid solution, magnesium oxide or other suitable metal oxides may be reacted with the phosphoric acid solution without departing from the scope of the invention.

The addition of a montmorillonite clay such as western bentonite to the binder matrix has been found to produce a tacky binder which adheres to virtually any surface. While Western Bentonite is preferred, any of the clays selected from the Montmorillonite types of clay minerals have been found to be suitable tackifying agents.

- 14 -

The binder of the present invention may be advantageously employed with refactory fibers in a spray-on proccess. That is, refractory fibers may be directed from a spray gun while at the same time being coated with the binder of the present invention. Such application of refractory fiber and binder has been found to raise the operating temperature of the refractory fibers above their normal rated temperature. For application of refractory fiber to a surface such as a furnace wall, the binder is diluted, preferably with water, in a 4.5 to 1 water to binder ratio by volume. This ratio may range from 2 to 15 to 1 by volume. The diluted binder is preferably stirred in the dilution container to ensure a homogenous mixture during the spraying process. The diluted binder may be sprayed with the fiber onto a surface in a ratio which depends upon binder dilution. For the preferred chromium aluminum phosphate binder disclosed above, a ratio of 0.794 kilogram (1,75 lbs) of fiber to 0.454 kilogram (1.0 lb.) binder is preferred.

- 15 -

Examples of different binder formulations and concentrations are listed below:

Binder #1 was a mixture of NALCO AG 1115 colloidal silica marketed by NALCO Chemical Corp. of 4 millimicron size particles containing 15% solids. 18.14 kilogram (forty pounds) of this solution was mixed with 0.5675 kilogram (1.25 lbs.) of western bentonite. The resulting binder was sprayed in a 30 % binder 70% alumina-silica-zirconia fiber ratio by weight and cured at 1000°F. A 19.22 kilogram (12 lb/ft$^3$) composite material resulted having good integrity.

Binder #2 was a mixture of the chromium aluminum phosphate binder matrix with bentonite clay and boric acid in the most preferred formulation previously disclosed. This binder concentrate was diluted 4 to 1 by volume with water and sprayed with alumina-silica-zirconia fiber in a ratio of 14% binder to 86% fiber by weight. This composite was then cured at 1000°F and produced a 19.22 kilogram (12 lb/ft$^3$) material.

Binder #3 was a mixture of 0.23 kilogram (1/2 lb.)
colloidal alumina, 0.91 kilogram (2 lbs.) of -325
mesh $Al_2O_3$ particles and 0.567 kilogram (1 1/4 lbs.)
bentonite in 0.91 kilogram (40 lbs.) of water. This
binder concentrate was sprayed with alumina- silica-
zirconia fibers in a ratio of 40% binder to 60% fiber.
The resulting material was cured at 537.78°C (1000°F)
and produced a material which did not adhere well
to the brick substrate and did not produce material
or sufficient integrity to allow density to be accurately measured.

Binder #4 was a mixture of 4.99 kilogram (11 lbs.)
of Kaolin Clay, 0.34 kilogram (3/4 lbs.) western
bentonite and 13.6 kilogram (30 lbs.) of water. This
binder mixture was too viscous to be sprayed.

Binder #5 was a mixture of the chromium aluminum
phosphate binder matrix with bentonite clay and boric
acid in the most preferred formulation previously
disclosed. This binder concentrate was diluted 10
to 1 by volume with water and sprayed in equal amounts
by weight with alumina-silica-zirconia fiber. The
resulting material was cured at 537.78°C (1000°F)
and produced a material of 240.28 $kg/m^3$ (15 $lb/ft^3$)
density.

Binder #6 was a mixture of the chromium aluminum
phosphate binder matrix with the bentonite clay and
boric acid in the most preferred formulation previously disclosed. This binder concentrate was diluted 15 to 1 by volume with water and sprayed in a
ratio of 45% binder to 55% alumina-silica-zirconia
fiber by weight. The resulting material was cured
at room temperature and procduced a material of
208.24 kg/m$^3$ (13 lbs/ft$^3$) density.

Binder #7 was a mixture of the chromium aluminum
phosphate binder matrix with bentonite clay and boric
acid in the most preferred formulation previously
disclosed. This binder was diluted 15 to 1 by volume
with water and sprayed in a ratio of 36% binder to
64% alumina-silica-zirconia fiber by weight. The
resulting material was cured at 537.78°C (1000°F)
but did not produce a material of sufficient integrity to obtain a density measurement.

Binder #8 was the colloidal silica binder disclosed
as binder #1 without the bontonite clay. The binder
was sprayed in a 60% binder to 40% fiber ratio weight
with alumina-silica-zirconia fibers. The resulting
material was cured at 537.78°C (1000°F) but did not
produce a material of sufficient integrity to obtain
a density measurement due to binder migration.

- 18 -

Binder #9 was a mixture of bentonite clay and water in a ratio by weight of 10% bentonite to 90% water. This binder did not bond with the alumina-silica-zirconia fiber.

A comparison of characteristics of the binder formulations is given below:

| | Binder Tacky | Integrity with fibers after Curing | Binder Migration |
|---|---|---|---|
| Binder #1 | Yes | Good | Some |
| Binder #2 | Yes | Fair | Very little |
| Binder #3 | Yes | Fair | Some |
| Binder #4 | Yes | Unknown | Unknown |
| Binder #5 | Yes | Excellent | Very little |
| Binder #6 | Yes | Excellent | Very little |
| Binder #7 | Yes | Fair | Unknown |
| Binder #8 | No | Poor | Very heavy |
| Binder#9 | Yes | None | Unknown |

A comparison of shrinkage between the materials of binders #1, 2, 3, 5, and 6 was made with other and with the fiber alone. After being exposed to a temperature of 1315.5°C (2400°F) for four hours the binder - fiber composites exhibited the following shrinkage characteristics:

|  | Shrinkage (%) |
|---|---|
| Binder #1 | 2.6 |
| Binder #2 | 1.5 |
| Binder #3 | 1.6 |
| Binder #4 | 1.6 |
| Binder #5 | 1.6 |
| Binder #6 | 1.4 |
| Fiber alone | 2.0 |

From the above it can be seen that composites formed from the most preferred binder concentrate formulation of binder #2, 5 and 6 exhibited less shrinkage than the fiber alone. While binder #3 exhibited low shringkage, the specific binder formulation exhibited only fair bonding characteristics.

- 20 -

A comparison of curing temperatures was made for binder #5. That is, the material made under binder formulation #5 was cured at 121.1°C (250°F), 176.67°C (350°F) and 232.2°C (450°F). Each material was then placed in a 90% humidity chamber for 72 hours with the following results: material cured at 121.1°C (250°F) received 31% added moisture and was wet and soft suggesting incomplete curing; the material cured at 176.67°C (350°F) received 18% added moisture and was somewhat wet and soft, but was marginally acceptable;K and the material cured at 232.2°C (450°F) received 13% added moisture and was hard and held its integrity. Thus the curing temperature has a lower limit of about 176.67°C (350°F) with a preferred curing temperature of about 232.2°C (450F) or more.

In order to determine the preferred limits of dilution and binder to fiber ratio for the most preferred chromium aluminum phosphate binder, the formulations of binder #2, 5, 6 and 7 were tested. The fiber-binder composite materials were compared with respect to the weight ratio of the original binder concentrate to fiber weight ratios in light of the integrity observed in the resulting material.

- 21 -

The ratio of the weight of binder concentrate to fiber was 4.86% for binder #2; 14.52% for binder #5; 8.33 % for binder #6; and 5.72% for binder #7. The materials produced by binders #5 and 6 had excellent integrity while the material from binders #2 and 7 had fair integrity. This suggests that the preferred binder concentrate to fiber weight ratio should be at least 6%. Thus, the binder dilution and diluted binder to fiber weight ratio should be adjusted accordingly.

Various diluents may be used as the carrier for the binder concentrate. While chromium aluminum phosphate with bentonite clay has been disclosed as the preferred binder, other binders employing a temperature resistant clay such as montmorillonite, or plastic ball clay containing montmorillonite clay in quantities sufficient to ensure a tacky inorganic binder, may be employed.
In addition, the spraying of a binder with particulate matter such as various metallic oxides could be employed to provide a particularly heat resistant surface over a sprayed fiber-binder layer.

Claims 1-22

1. Refractory binder comprising:
   a phosphate matrix; and
   a tackifying agent in intimate admixture with
   said phosphate matrix.

2. Binder according to claim 1 wherein said tackifying agent is montmorillonite clay.

3. Binder according to claim 1 wherein said tackifying agent is bentonite clay.

4. Binder according to claim 1 further including
   a fluxing agent.

5. Binder according to claim 1 further including
   a metal oxide selected from the group consisting
   of alumina, magnesium or silica.

6. Binder according to claim 4 wherein said fluxing
   agent is boric acid.

7. Binder according to claim 1 further including
   a chromium compound.

8. Binder according to claim 7 wherein said chromium
   compound is chromic oxide.

9. Refractory binder comprising by weight percent:
   chromium compound          1-2%
   phosphoric acid            75-85%
   hydrated alumina          10-20%
   tackifying agent            1-5%

10. Refractory binder according to claim 9 further
    including up to 5% by weight percent of a fluxing
    agent.

11. Refractory binder according to claim 9 wherein
    said tackifying agent includes montmorillonite
    clay.

12. Method for making a refractory binder comprising
    the steps of:
    stirring a phosphate - tackifying agent mixture;
    heating said mixture said to at least approximately 37.78°C (100°F);
    adding hydrated alumina to said mixture; and
    heating said hydrated alumina-phosphate-tackifying
    agent to at least approximately 82.2°C (180°F).

- 3 -

13. Method according to claim 12 further including the step of adding a chromium compound to said mixture.

14. Method according to claim 12 further including the step of adding a fluxing agent to said phosphate-tackifying mixture.

15. Method according to claim 12 wherein said tackifying agent includes montmorillonite clay.

16. Method according to claim 14 wherein said fluxing agent is boric acid.

17. A refractory material comprising:
    a plurality of refractory fibers; and
    a phosphate-tackifying agent mixture.

18. Material according to claim 17 wherein said tackifying agent includes montmorillonite clay.

19. Material according to claim 17 wherein said mixture further includes a chromium compound.

20. Material according to claim 17 wherein said mixture further includes a fluxing agent.

21. Material according to claim 20 wherein said fluxing agent is boric acid.

22. Material according to claim 17 wherein said mixture further includes alumina.